# EUROPEAN PATENT APPLICATION

(11) **EP 3 955 398 A1**
(43) Date of publication of application: **16.02.2022**
(21) Application number: 21753942.8
(22) Date of filing: 04.02.2021
(51) Int. Cl.: H01S 3/115, H01S 3/094, H01S 3/102

(54) **MULTI-LASER PULSE OSCILLATION METHOD AND MULTI-LASER PULSE OSCILLATION DEVICE USING MULTI-Q-SWITCHING**

(30) Priority: 13.02.2020 KR 20200017687
(71) Applicant: Ltraglobal Co., Ltd., Gyeonggi-do 13201 (KR)
(72) Inventor: MAENG, Chan Ho, Seongnam-si Gyeonggi-do 13643 (KR); SU, Kil Sung, Seongnam-si Gyeonggi-do 13391 (KR)
(74) Representative: Hoffmann Eitle
(86) International application number: PCT/KR2021/001463
(87) International publication number: WO 2021/162339

(57) **Abstract**

Provided is a multiple laser pulse oscillation method using multiple Q-switching capable of reducing peak power of laser and increasing energy efficiency. A multiple laser pulse oscillation method using multiple Q-switching includes: forming one period of light energy; exciting electrons of a gain medium by the light energy; performing first Q-switching during one period of the light energy; oscillating a first laser pulse by the first Q-switching; performing second Q-switching during one period of the light energy; and oscillating a second laser pulse by the second Q-switching.

## Description

### TECHNICAL FIELD

The present disclosure relates to a laser generation method, and more particularly, to multiple laser pulse generation method and apparatus using multiple Q-switching.

### BACKGROUND ART

Since the development of a ruby laser that is the first laser was introduced to the medical community in 1960, ND-YAG lasers, heliumneon lasers, and pigment lasers have been developed and have shown excellent effects in treating skin diseases. The basic principle of such lasers is that targets such as water, melanin, oxyhemoglobin, and the like have their own frequencies and a reaction occurs on a specific target when a laser having a similar frequency to the frequency of the specific target is irradiated thereto. This is the biggest feature of laser that can optionally treats a target. Although it is related to the absorbance of each target, the biggest difference is that ordinary light has many wavelengths, whereas laser always has only one fixed wavelength. Due to this wavelength difference, various laser materials have their own specific wavelengths, and the types of lasers can be divided into several types of lasers such as excimer, diode, CO2, ND-YAG, and the like, depending on the medium.

Depending on the application range of lasers, there are various types of lasers used for each application, for example, in general hospitals, for incisions on surgical sites of soft tissue, ulcers, tattoo removal, disinfection, and the like, and in dentistry, for hard and soft tissues for tooth decay removal, implant surgery, hypersensitivity reactions, and the like. Depending on the time passage, the ruby laser and argon laser were first attempted in the treatment of flaming nevus in 1963. From the mid-1970s, argon and CO₂ lasers began to be used in earnest for the treatment of vascular lesions, pigmented diseases, and tumors. Recently, various lasers are developed and used to treat various skin diseases that were regarded to be impossible or difficult to treat in the past. Lasers currently used in the dermatology field can be largely divided into a laser used for the treatment of various skin tumors, scars, and the like, a laser for vascular disease treatment, and a laser for tattoo treatment. Recently, as interest in skin aging and skin regeneration increases, the function of existing laser equipment, which has been generally used for the purpose of vascular lesions, pigmented lesions, and hair removal, has been broadly expanded as a demand for skin lifting, elasticity, and regeneration functions is increased.

A Q-switching laser is a representative technology that generates the most widely used short pulse width laser. The Q-switching laser is a laser with a short pulse width of 5 nanoseconds to 15 nanoseconds and has a high pulse power. For example, when the Q-switching laser has a pulse width of 10 nanoseconds and an output energy of 1J with, the laser pulse power has a high power of 100 MW. Due to the high power, the Q-switching laser may have a limitation in clinical use such as skin treatment.

In order to oscillate the Q-switching laser, a flash lamp is discharged and the light energy generated from the flash lamp is injected into a laser medium, and in the laser medium, density inversion occurs to make electrons in an excited state, and accordingly, laser resonance is generated. The width of the light energy generated from the flash lamp is about 250 microseconds (µs), and the electrons are continuously excited in the laser medium by the light energy generated at the pulse time.

The ND-YAG laser has a duration of about 230 µs in an excited state. A queue-switch signal is injected with a delay of about 150 µs after first pumping starts, and a laser with a short pulse width and a high peak power is oscillated. As the light energy is continuously injected from the flash lamp even after the laser is oscillated, electrons are continuously excited in the ND-YAG that is a laser medium, but do not contribute to the laser oscillation. In other words, as the light energy is no longer used after the queue-switch signal is applied, unnecessary consumption of light energy and electrical energy occurs.

### DESCRIPTION OF EMBODIMENTS

### TECHNICAL PROBLEM

Provided is a multiple laser pulse oscillation method using multiple Q-switching to reduce laser peak power and increase energy efficiency.

However, such an objective is merely exemplary, and the technical concept of the present disclosure is not limited thereto.

### SOLUTION TO PROBLEM

According to an aspect of the present disclosure, a multiple laser pulse oscillation method using multiple Q-switching includes forming one period of light energy; exciting electrons of a gain medium by the light energy, performing first Q-switching during one period of the light energy, oscillating a first laser pulse from the excited electrons of the gain medium by the first Q-switching; performing second Q-switching during the one period of the light energy, and oscillating a second laser pulse from the excited electrons of the gain medium by the second Q-switching.

In an embodiment of the present disclosure, the first Q-switching may have a delay time ranging from 80 µs to 150 µs directly after the light energy is formed.

In an embodiment of the present disclosure, the second Q-switching may have a delay time ranging from 10 µs to 30 µs from the first Q-switching.

In an embodiment of the present disclosure, the method may further include performing third Q-switching when a delay time ranging from 10 µs to 30 µs passes after the second Q-switching is performed, during the one period of the light energy, and oscillating a third laser pulse by the third Q-switching.

In an embodiment of the present disclosure, the method may further include performing fourth Q-switching when a delay time ranging from 10 µs to 30 µs passes after the third Q-switching is performed, during the one period of the light energy, and oscillating a fourth laser pulse by the fourth Q-switching.

In an embodiment of the present disclosure, the method may further include performing fifth Q-switching when a delay time ranging from 10 µs to 30 µs passes after the fourth Q-switching is performed, during the one period of the light energy, and oscillating a fifth laser pulse by the fifth Q-switching.

In an embodiment of the present disclosure, the method may further include performing sixth Q-switching when a delay time ranging from 10 µs to 30 µs passes after the fifth Q-switching is performed, during the one period of the light energy, and oscillating a sixth laser pulse by the sixth Q-switching.

In an embodiment of the present disclosure, the method may further include performing seventh Q-switching when a delay time ranging from 10 µs to 30 µs passes after the sixth Q-switching is performed, during the one period of the light energy, and oscillating a seventh laser pulse by the seventh Q-switching.

In an embodiment of the present disclosure, the one period of the light energy may range from 200 µs to 350 µs.

According to another aspect of the present disclosure, a multiple laser pulse oscillation apparatus including a mirror, a wavelength portion, a Q-switching portion, a polarization portion, a gain medium portion, an output coupler portion, a first control portion, and a second control portion, performs forming one period of light energy in the gain medium portion as the first control portion applies an electrical control signal, exciting electrons of the gain medium of the gain medium portion by the light energy, performing first Q-switching in the Q-switching portion as the second control portion applies an electrical control signal during one period of the light energy, oscillating a first laser pulse by the first Q-switching, performing second Q-switching in the Q-switching portion during the one period of the light energy, and oscillating a second laser pulse by the second Q-switching.

### ADVANTAGEOUS EFFECTS OF DISCLOSURE

A multiple laser pulse oscillation method using multiple Q-switching according to the present disclosure may oscillate a multiple laser pulse by performing multiple Q-switching during the formed one period of light energy. Accordingly, an effect of reducing a laser pulse output to a desired level may be provided. Furthermore, as a laser pulse may be oscillated using the energy of excited electrons that are not used when one-time Q-switching is performed, an efficient laser oscillation effect may be provided.

The above-described effects of the present disclosure are exemplarily set forth, and the scope of the present disclosure is not limited to these effects.

### BRIEF DESCRIPTION OF DRAWINGS

FIG. 1 is a schematic view of a multiple laser pulse oscillation apparatus using multiple Q-switching that implements a multiple laser pulse oscillation method using multiple Q-switching, according to the present disclosure.
FIG. 2 is a flowchart of a multiple laser pulse oscillation method using multiple Q-switching according to the present disclosure.
FIG. 3 is a graph showing results of performing a multiple laser pulse oscillation method using multiple Q-switching according to an embodiment of the present disclosure.

### MODE OF DISCLOSURE

The disclosure will now be described more fully with reference to the accompanying drawings, in which embodiments of the disclosure are shown. The disclosure may, however, be embodied in many different forms and should not be construed as being limited to the embodiments set forth herein; rather, these embodiments are provided so that this disclosure will be thorough and complete, and will fully convey the concept of the disclosure to those skilled in the art. Like reference numerals in the drawings denote like elements Furthermore, various components and regions in the drawings are schematically illustrated. Accordingly, the present invention is not limited by the relative size or distance drawn in the accompanying drawings.

According to the present disclosure, in order to reduce high laser oscillation peak power and maintain high output energy, a Q-switching laser generates three or more laser pulses in one period by operating, for example, two or more or three or more queue-switches in one pulse period, for example, 230 µs to 330 µs. The pulse period may mean one light emission period of a flash lamp in a pulse power circuit to discharge a flash lamp. As the laser injects multiple Q-switching pulses in one pumping period by operating multiple queue-switches at a certain interval, the laser pulse may include a plurality of laser pulses, for example, three or more laser pulses. As a result, peak power of the laser pulse may be reduced. Furthermore, by controlling a Q-switching signal delay time, excited electrons may be efficiently used for laser oscillation, and thus overall laser oscillation output energy may be increased. A high single pulse peak power problem according to the related art may be solved, and as the total laser oscillation output energy is increased, a possibility of clinical application may be expended.

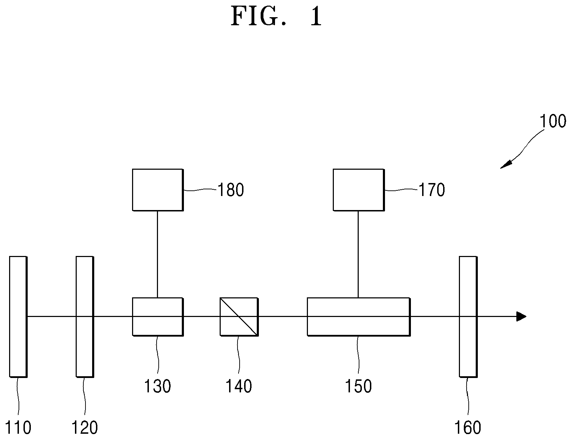

FIG. 1 is a schematic view of a multiple laser pulse oscillation apparatus 100 using multiple Q-switching that implements a multiple laser pulse oscillation method using multiple Q-switching according to the present disclosure.

Referring to FIG. 1, the multiple laser pulse oscillation apparatus 100 may include a mirror 110, a wavelength portion 120, a Q-switching portion 130, a polarization portion 140, a gain medium portion 150, an output coupler portion 160, a first control portion 170, and a second control portion 180. The mirror 110, the wavelength portion 120, the Q-switching portion 130, the polarization portion 140, the gain medium portion 150, and the output coupler portion 160 may be arranged in the above-described order.

The first control portion 170 may be connected to the gain medium portion 150 to apply an electrical signal thereto. The second control portion 180 may be connected to the Q-switching portion 130 to apply an electrical signal thereto and may further include a driving driver for the Q-switching portion, a transformer for high voltage, and the like. The gain medium portion 150 may include a gain medium such as ND-YAG rad, YVO4 Alexandria, difference sapphire rad, and the like, and a flash lamp. The output coupler portion 160 may include a mirror. The wavelength portion 120 and the polarization portion 140 may each have a flat plate shape.

A laser pulse that is oscillated by the multiple laser pulse oscillation apparatus 100 may be generated in the following method.

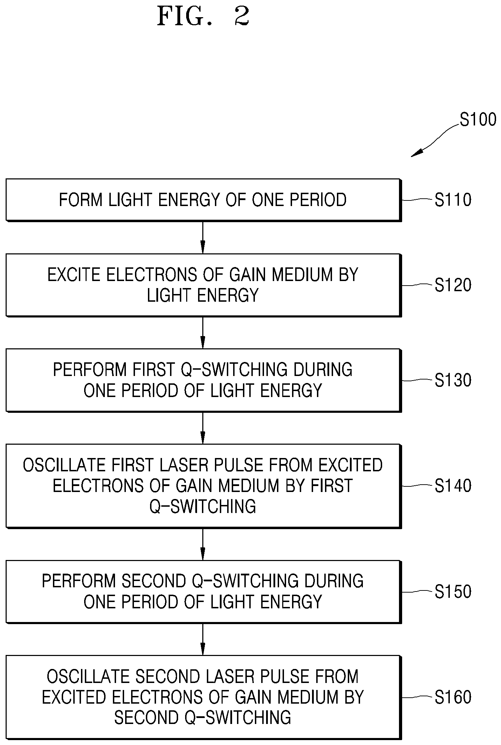

FIG. 2 is a flowchart of a multiple laser pulse oscillation method S 100 using multiple Q-switching according to the present disclosure.

Referring to FIG. 2, a multiple laser pulse oscillation method S100 using multiple Q-switching may include: forming one period of light energy (S110); exciting electrons of a gain medium by the light energy (S120); performing first Q-switching during one period of the light energy (S130); oscillating a first laser pulse from the excited electrons of the gain medium by the first Q-switching (S140); performing second Q-switching during one period of the light energy (S150); and oscillating a second laser pulse from the excited electrons of the gain medium by the second Q-switching (S160).

In detail, with reference to FIG. 1, when the first control portion 170 applies an electrical control signal to the gain medium portion 150, one period of light energy is formed as a voltage and a current increase and then decrease in the flash lamp included in the gain medium portion 150. The electrons of the gain medium included in the gain medium portion 150 are excited by the light energy.

Next, when first Q-switching is performed as the second control portion 180 applies an electrical control signal to the Q-switching portion 130 during one period of the light energy, a laser pulse oscillates to the outside from the excited electrons in the gain medium. The laser pulse may be reflected by the mirror 110 in the opposite direction, and may pass through the wavelength portion 120, the polarization portion 140, and the output coupler portion 160, thereby oscillating to the outside. When necessary, the laser pulse may be reflected by the output coupler portion 160 in the opposite direction. Furthermore, when necessary, the laser pulse may be polarized by the polarization portion 140, thereby oscillating by changing the direction.

Next, when second Q-switching is performed as the second control portion 180 applies an electrical control signal to the Q-switching portion 130 during one period of the light energy, a laser pulse oscillates again to the outside from the excited electrons in the gain medium. In the present disclosure, the first Q-switching and the second Q-switching are performed during one period of the light energy.

Next, third Q-switching to seventh Q-switching are performed in the same method during one period of the light energy, thereby oscillating a third laser pulse to a seventh laser pulse, respectively. The seventh Q-switching is exemplary, and the present disclosure includes performing certain n-time Q-switching.

The first Q-switching may have a delay time ranging from 80 µs to 150 µs directly after the light energy is formed.

The second Q-switching may have a delay time ranging from 10 µs to 30 µs from the first Q-switching.

During one period of the light energy, performing third Q-switching when a delay time ranging from 10 µs to 30 µs passes after the second Q-switching is performed, and oscillating a third laser pulse by the third Q-switching, may be further included.

During one period of the light energy, performing fourth Q-switching when a delay time ranging from 10 µs to 30 µs passes after the third Q-switching is performed, and oscillating a fourth laser pulse by the fourth Q-switching, may be further included

During one period of the light energy, performing fifth Q-switching when a delay time ranging from 10 µs to 30 µs passes after the fourth Q-switching is performed, and oscillating a fifth laser pulse by the fifth Q-switching, may be further included.

During one period of the light energy, performing sixth Q-switching when a delay time ranging from 10 µs to 30 µs passes after the fifth Q-switching is performed, and oscillating a sixth laser pulse by the sixth Q-switching, may be further included.

During one period of the light energy, performing seventh Q-switching when a delay time ranging from 10 µs to 30 µs passes after the sixth Q-switching is performed, and oscillating a seventh laser pulse by the seventh Q-switching, may be further included.

The delay time is exemplary and may have various time ranges.

Furthermore, the light energy may be formed by repeating the above-described method in next one period, and also the Q-switching may be repeatedly performed in the same method,

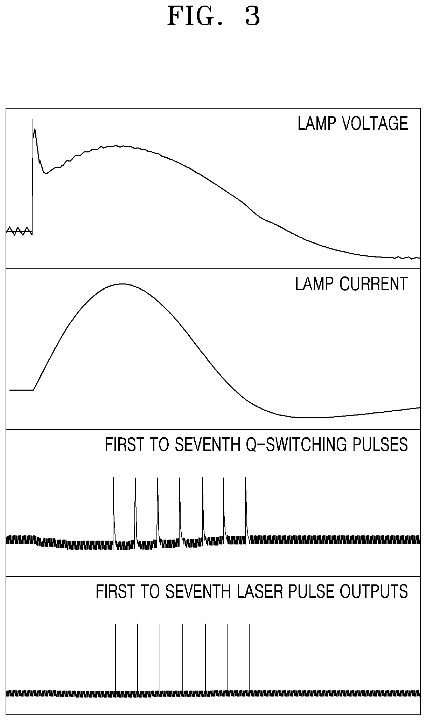

FIG. 3 is a graph showing results of performing a multiple laser pulse oscillation method using multiple Q-switching according to an embodiment of the present disclosure.

Referring to FIG. 3, the voltage and the current of a flash lamp are shown, and it may be seen that the one period of light energy is provided. One period of the light energy may range from about 200 µs to about 350 µs. Eight queue-switch pulse peaks indicating eight-time Q-switching and eight laser pulse output peaks that are oscillated accordingly during one period of the light energy are shown.

A delay time from when a voltage of the flash lamp is applied to a first queue-switch pulse may range from about 80 µs to about 150 µs. A delay time to a second queue-switch pulse with respect to the first queue-switch pulse may range from about 15 µs to about 35 µs. A delay time to a third queue-switch pulse with respect to the first queue-switch pulse may range from about 40 µs to about 60 µs. A delay time to a fourth queue-switch pulse with respect to the first queue-switch pulse may range from about 65 µs to about 85 µs. A delay time to a fifth queue-switch pulse with respect to the first queue-switch pulse may range from about 90 µs to about 110 µs. A delay time to a sixth queue-switch pulse with respect to the first queue-switch pulse may range from about 115 µs to about 135 µs. A delay time to a seventh queue-switch pulse with respect to the first queue-switch pulse may range from about 140 µs to about 160 µs.

In a Q-switching laser according to the related art, electrons are accumulated in the excited state in the gain medium until a queue-switch is turned on, and when the queue-switch is turned on, the electrons in the excited state accumulated so far are simulated to resonate, thereby oscillating laser. When one-time Q-switching is performed, the electrons continuously receive light energy even after a queue-switch delay time so as to be continuously changed to the excited state. However, Q-switching is performed no longer during one period of light energy, and thus laser is oscillated no longer during one period of light energy.

However, in the multiple laser pulse oscillation method using multiple Q-switching according to the present disclosure, as Q-switching is continuously performed during one period of light energy, there is efficiency of further using the excited electrons, and as laser is continuously oscillated, the pumping energy of laser may be effectively used as a whole.

While the disclosure has been particularly shown and described with reference to preferred embodiments using specific terminologies, the embodiments and terminologies should be considered in descriptive sense only and not for purposes of limitation. Therefore, it will be understood by those of ordinary skill in the art that various changes in form and details may be made therein without departing from the spirit and scope of the disclosure as defined by the following claims.

### INDUSTRIAL APPLICABILITY

The present disclosure may be used for a laser generation method.

## Claims

1. A multiple laser pulse oscillation method using multiple Q-switching, the method comprising:
forming one period of light energy;
exciting electrons of a gain medium by the light energy;
performing first Q-switching during one period of the light energy;
oscillating a first laser pulse from the excited electrons of the gain medium by the first Q-switching;
performing second Q-switching during the one period of the light energy; and
oscillating a second laser pulse from the excited electrons of the gain medium by the second Q-switching.

2. The method of claim 1, wherein the first Q-switching has a delay time ranging from 80 µs to 150 µs directly after the light energy is formed.

3. The method of claim 1, wherein the second Q-switching has a delay time ranging from 10 µs to 30 µs from the first Q-switching.

4. The method of claim 1, further comprising:
performing third Q-switching when a delay time ranging from 10 µs to 30 µs passes after the second Q-switching is performed, during the one period of the light energy; and
oscillating a third laser pulse by the third Q-switching.

5. The method of claim 4, further comprising:
performing fourth Q-switching when a delay time ranging from 10 µs to 30 µs passes after the third Q-switching is performed, during the one period of the light energy; and
oscillating a fourth laser pulse by the fourth Q-switching.

6. The method of claim 5, further comprising:
performing fifth Q-switching when a delay time ranging from 10 µs to 30 µs passes after the fourth Q-switching is performed, during the one period of the light energy; and
oscillating a fifth laser pulse by the fifth Q-switching.

7. The method of claim 6, further comprising:
performing sixth Q-switching when a delay time ranging from 10 µs to 30 µs passes after the fifth Q-switching is performed, during the one period of the light energy; and
oscillating a sixth laser pulse by the sixth Q-switching.

8. The method of claim 7, further comprising:
performing seventh Q-switching when a delay time ranging from 10 µs to 30 µs passes after the sixth Q-switching is performed, during the one period of the light energy; and
oscillating a seventh laser pulse by the seventh Q-switching.

9. The method of claim 1, wherein the one period of the light energy ranges from 200 µs to 350 µs.

10. A multiple laser pulse oscillation apparatus comprising a mirror, a wavelength portion, a Q-switching portion, a polarization portion, a gain medium portion, an output coupler portion, a first control portion, and a second control portion, the apparatus performing:
forming one period of light energy in the gain medium portion as the first control portion applies an electrical control signal;
exciting electrons of the gain medium of the gain medium portion by the light energy;
performing first Q-switching in the Q-switching portion as the second control portion applies an electrical control signal during one period of the light energy;
oscillating a first laser pulse by the first Q-switching;
performing second Q-switching in the Q-switching portion during the one period of the light energy; and
oscillating a second laser pulse by the second Q-switching.
